# EUROPÄISCHE PATENTANMELDUNG

(11) **EP 3 656 736 A1**
(43) Veröffentlichungstag der Anmeldung: **27.05.2020**
(21) Anmeldenummer: 18020615.3
(22) Anmeldetag: 22.11.2018
(51) Int. Cl.: C01B 3/14, C01B 3/50

(54) **VERFAHREN UND ANLAGE ZUM HERSTELLEN EINES KONVERTIERTEN SYNTHESEGASES**

(71) Anmelder: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Lehmann, Maik, 60385 Frankfurt am Main (DE); Rösch, Alexander, 35510 Butzbach (DE)
(74) Vertreter: Dropsch, Holger

(57) **Zusammenfassung**

Die Erfindung betrifft ein Verfahren zum Herstellen eines konvertierten Synthesegases aus einem Rohsynthesegas, umfassend die wesentlichen Synthesegasbestandteile Wasserstoff (H₂) und Kohlenmonoxid (CO), wobei zunächst das Rohsynthesegas in einer Synthesegaserzeugungsstufe erzeugt und nachfolgend in einer mehrstufigen CO-Konvertierung umgesetzt und so hinsichtlich seines Wasserstoffgehalts erhöht wird. Hierbei wird dem Rohsynthesegas Dampf als Reaktionspartner für die CO-Konvertierung zugegeben und es wird bei der Abkühlung des konvertierten Synthesegases ein wässriges Kondensat erhalten. Erfindungsgemäß wird der Reaktionsdampfstrom zumindest teilweise durch Verdampfen von Kesselspeisewasser in einem ersten Dampferzeuger und/oder mindestens eines Teils des wässrigen Prozesskondensats erzeugt. Somit wird eine Ressourcen schonende, energetisch optimierte und apparativ wenig aufwendige Erzeugung von Reaktionsdampf für die CO-Konvertierung ermöglicht. Die im Kondensat enthaltenen Spurenkomponenten werden durch die Rückführung des Kondensats teilweise abgebaut und somit ihre Konzentration reduziert und die ausgeleitete und zu entsorgende Kondensatmenge verringert sich.

## Beschreibung

### Gebiet der Erfindung

Die Erfindung betrifft ein Verfahren zum Herstellen eines konvertierten Synthesegases aus einem Rohsynthesegas, umfassend die wesentlichen Synthesegasbestandteile Wasserstoff (H₂) und Kohlenmonoxid (CO), wobei zunächst das Rohsynthesegas in einer Synthesegaserzeugungsstufe erzeugt und nachfolgend in einer mehrstufigen CO-Konvertierung umgesetzt und so hinsichtlich seines Wasserstoffgehalts erhöht wird. Hierbei wird dem Rohsynthesegas Dampf als Reaktionspartner für die CO-Konvertierung zugegeben und es wird bei der Abkühlung des konvertierten Synthesegases ein wässriges Kondensat erhalten.

Die Erfindung betrifft auch eine Anlage zur Durchführung des erfindungsgemäßen Verfahrens.

### Stand der Technik

Aufgrund seiner großen Bedeutung als Einsatzstoff für zahlreiche chemische Synthesen, beispielsweise chemisch-industrieller Grundprodukte wie Methanol oder Ammoniak, ist die Herstellung von Synthesegas, also als wesentliche Bestandteile Wasserstoff (H₂) und Kohlenmonoxid (CO) umfassende Gasgemische, seit langem bekannt und vielfach im Schrifttum diskutiert. Eine Übersicht über den Stand der Technik bieten die Artikel unter den Stichworten "Gas Production" sowie "Ammonia - 4.5.1 Synthesis Gas Production", beide in Ullmann's Encyclopedia of Industrial Chemistry, Sixth Edition, 1998 Electronic Release, Verlag Wiley-VCH, sowie die Monographie "Gasification", 2nd Edition, C. Higman, M. van der Burgt, Gulf Professional Publishing (2008).

Als Edukte für die Synthesegaserzeugung dienen allgemein kohlenstoffhaltige Einsatzstoffe oder Einsatzstoffgemische, die in festem, flüssigem oder gasförmigem Aggregatzustand vorliegen können. Als Beispiele sind hier Kohle in stückiger Form oder Pulverform, Biomasse, Erdölfraktionen, Pyrolyseöle, Biogas oder Erdgas zu nennen. Bei der Umwandlung nicht-gasförmiger Einsatzstoffe in Synthesegas wird der Vorgang oft als Vergasung bezeichnet, wohingegen beim Einsatz von Erdgas eher von Reformierung, beispielsweise - je nach Verfahrensführung - von Dampfreformierung (Steamreforming) oder autothermer Reformierung (ATR) oder - bei Abwesenheit fester Katalysatoren - von partieller Oxidation (POX) gesprochen wird.

Als Produkt der Synthesegaserzeugung wird zunächst ein Rohsynthesegas erhalten, das in vielen Fällen hinsichtlich seines H₂/CO-Verhältnisses verändert und von bestimmten unerwünschten Nebenprodukten und Spurenbestandteilen befreit werden soll, um es als Einsatz für nachgeschaltete Verfahrens- oder Synthesestufen geeignet zu machen.

Die Einstellung des H₂/CO-Verhältnisses erfolgt über die CO-Konvertierungsreaktion, auch als Wassergas-Shift-Reaktion (WGS) oder CO-Shift-Reaktion bezeichnet, gemäß der Umsatzgleichung

CO + H₂O = CO₂ + H₂

Unter Zugabe von Wasserdampf als Reaktionsdampf reagiert demnach das CO zu CO₂ und H₂. Aufgrund der Reaktionsenthalpie von -41,2 kJ/mol verschiebt sich das chemische Gleichgewicht mit steigender Temperatur von den Reaktionsprodukten hin zu den Reaktionsedukten. Je nach angewandter Reaktionstemperatur wird dabei von Hochtemperatur (HTS)-, Mitteltemperatur (MTS)- oder Tieftemperatur (LTS)-Shift gesprochen.

Je nach Art der verwendeten Katalysatoren ist es ferner möglich, die Shift-Reaktion auch mit dem ungereinigten Rohsynthesegas durchzuführen. Dieses Verfahren wird als Rohgas-Shift oder auch - wegen der aciden Gasbestandteile, namentlich CO₂ und H₂S - als Sauergas-Shift bezeichnet. Sie kann auch mit Rohsynthesegasen durchgeführt werden, die signifikante Mengen an Schwefel, Ruß oder kondensierbaren Kohlenwasserstoffen enthalten. Eine typische Anwendung besteht in der CO-Konvertierung von Rohgasen aus der Schwerölvergasung, die nicht gekühlt und entschwefelt wurden, sondern nur im heißen Zustand schlagartig abgekühlt oder abgeschreckt ("gequencht") wurden, um den erforderlichen Dampf hinzuzufügen und Ruß zu entfernen. Eine weitere typische Anwendung besteht in der Konvertierung des Kohlenmonoxids in Rohgasen aus der Kohledruckvergasung, die nicht nur Schwefel, sondern auch gesättigte und ungesättigte Kohlenwasserstoffe, einschließlich Teere, enthalten. Zur Umwandlung beider Rohgasarten haben sich besonders Katalysatoren auf Basis von Cobalt/Molybdän bewährt. Diese sind schwefelresistent bzw. erreichen erst in Gegenwart sulfidischen Schwefels ihre volle Aktivität. So kann der Kohlenmonoxidgehalt (ca. 45 Vol.-%) eines Rohgases aus der partiellen Oxidation von Schweröl, das bei etwa 250 ºC Dampf/Trockengas-Verhältnis von ca. 0,8 in den CO-Shift-Reaktor eintritt, in einem zweistufigen CO-Shift-Reaktorsystem mit Cobalt/Molybdän-Katalysator auf ca. 1,6 Vol.-% abgesenkt werden. Die durch die Reaktionsenthalpie freigesetzte Wärme wird häufig in einer oder mehreren Dampferzeugungsanlagen von Dampf mit hohem und niedrigem Druck und zur Vorwärmung von Speisewasser verwendet. Insbesondere der so erzeugte Hochdruckdampf kann auch als Reaktionsdampf für die CO-Konvertierung gemäß der oben wiedergegebenen Umsatzgleichung verwendet werden.

Nach der Durchführung der u. U. mehrstufig durchgeführten CO-Konvertierung wird das als Konvertierungsprodukt erhaltene Synthesegas zumeist abgekühlt, um es beispielsweise einer nachfolgenden Gasreinigung zuzuführen. Dabei wird ein wässriges Kondensat enthalten, das auch Spurenkomponenten bzw. Störkomponenten wie gelöste Gase, beispielsweise CO, CO₂, H₂, Methan (CH₄) und Ammoniak (NH₃) enthält. Aber auch Methanol (CH₃OH) kann in dem wässrigen Kondensat enthalten sein, da es in den CO-Konvertierungsreaktoren gemäß folgender Gleichgewichtsreaktion als Spurenkomponente gebildet wird:

CO + 2 H₂ = CH₃OH

Die Lage des Reaktionsgleichgewichtes ist u. a. temperaturabhängig, wobei die Methanolbildung bei niedrigen Temperaturen thermodynamisch begünstigt ist.

Die Entsorgung dieses Kondensats ist daher aufwendig. Daher wird in der europäischen Patentanmeldung EP 0 044 071 A1 vorgeschlagen, das Kondensat durch Wärmetausch mit dem mindestens teilweise konvertierten Gas zu verdampfen und gemeinsam mit dem Gasstrom der Konvertierung zuzuführen. Mit anderen Worten wird vorgeschlagen, das verdampfte Kondensat als Reaktionsdampf für die CO-Konvertierung zu nutzen.

Aufgrund seines Gehalts an den oben genannten Störkomponenten kann aber nicht der gesamte Kondensatstrom als Reaktionsdampf genutzt werden, vielmehr ist ein kleiner Teil aus dem Verfahren zu entfernen, um eine weitere Anreicherung der Störkomponenten zu verhindern. Dieser Ausschleusungsstrom wird dabei als Spülstrom, Purgestrom oder Bleedstrom bezeichnet.

Oft reicht der verdampfte Anteil des Kondensats mengenmäßig nicht aus, um die benötigte Gesamtmenge an Reaktionsdampf für die CO-Konvertierung zu bilden. Es besteht daher weiterer Bedarf an Verfahren, die eine energetisch optimierte Erzeugung von Reaktionsdampf für die CO-Konvertierung bei optionaler Nutzung des erhaltenen Kondensats als einer Dampfquelle vorschlagen.

Eine alternative Möglichkeit zum Zuführen des benötigten Reaktionsdampfs für die CO-Konvertierung sieht vor, dem ersten CO-Konvertierungsreaktor einen speziellen Sättiger vorzuschalten, der beispielsweise als Kolonne mit Einbauten ausgeführt wird und durch den das Rohsynthesegas geführt und dort mit Wasserdampf gesättigt wird. Der überschüssige Wasserdampf wird dem CO-Konvertierungsproduktgas stromabwärts des letzten CO-Konvertierungsreaktors in einem speziellen Entsättiger entzogen, in kondensierter Form zum Sättiger zurückgeführt und dort erneut zur Sättigung des eintretenden Rohsynthesegases genutzt ("Gasification", 2nd Edition, C. Higman, M. van der Burgt, Gulf Professional Publishing (2008), Fig. 8-13, S. 349). Obwohl auf diese Weise eine wirksame Sättigung des Rohsynthesegases erfolgen kann, ist der apparative Aufwand hoch, da zusätzliche Vorrichtungen, nämlich der Sättiger und der Entsättiger, vorgesehen werden müssen.

### Beschreibung der Erfindung

Aufgabe der Erfindung ist es daher, ein Verfahren und eine entsprechende Anlage anzugeben, die eine energetisch optimierte und apparativ wenig aufwendige Erzeugung von Reaktionsdampf für die CO-Konvertierung ermöglichen.

Diese Aufgabe wird im Wesentlichen durch ein Verfahren mit den Merkmalen des Anspruchs 1 ff. und durch eine Anlage gemäß Anspruch 8 ff. gelöst. Weitere, insbesondere bevorzugte Ausgestaltungen des Verfahrens und der Anlage finden sich in den jeweiligen Unteransprüchen.

### Erfindungsgemäßes Verfahren:

Verfahren zum Herstellen eines konvertierten Synthesegases, enthaltend Wasserstoff (H₂) und Kohlenmonoxid (CO), umfassend folgende Verfahrensschritte:
(a) Bereitstellen eines ersten Synthesegasstroms mit einem ersten H₂/CO-Verhältnis und Bereitstellen eines Reaktionsdampfstroms,
(b) Zusammenführen und Vermischen des ersten Synthesegasstroms mit dem Reaktionsdampfstrom,
(c) Einleiten des ersten Synthesegasstroms mit dem beigemischten Reaktionsdampfstrom in eine erste CO-Konvertierungsstufe und Umsetzen unter CO-Konvertierungsbedingungen, Ausleiten eines zweiten Synthesegasstroms mit einem zweiten H₂/CO-Verhältnis,
(d) Bereitstellen einer ersten Dampferzeugungsanlage, geeignet zum Erzeugen eines ersten Dampfstroms durch Verdampfen von Kesselspeisewasser und/oder einem wässrigen Prozesskondensat,
(e) Einleiten des zweiten Synthesegasstroms als Heizstrom in die erste Dampferzeugungsanlage, Ausleiten eines abgekühlten zweiten Synthesegasstroms und eines ersten Dampfstroms aus der ersten Dampferzeugungsanlage,
(f) Einleiten des abgekühlten zweiten Synthesegasstroms in eine zweite CO-Konvertierungsstufe und Umsetzen unter CO-Konvertierungsbedingungen, Ausleiten eines dritten Synthesegasstroms mit einem dritten H₂/CO-Verhältnis,
(g) Einleiten des dritten Synthesegasstroms in mindestens eine Abkühlvorrichtung, Abkühlen des dritten Synthesegasstroms in der mindestens einen Abkühlvorrichtung unter seinen Taupunkt, Ausleiten eines abgekühlten dritten Synthesegasstroms und des wässrigen Prozesskondensats,
   dadurch gekennzeichnet, dass
(h) der Reaktionsdampfstrom den ersten Dampfstrom umfasst,
(i) das Erzeugen des ersten Dampfstroms in der ersten Dampferzeugungsanlage durch Verdampfen von Kesselspeisewasser und/oder mindestens eines Teils des wässrigen Prozesskondensats erfolgt.

### Erfindungsgemäße Anlage:

Anlage zum Herstellen eines konvertierten Synthesegases, enthaltend Wasserstoff (H₂) und Kohlenmonoxid (CO), umfassend folgende, in Fluidverbindung miteinander stehende Bestandteile:
(a) Mittel zum Bereitstellen eines ersten Synthesegasstroms mit einem ersten H₂/CO-Verhältnis und zum Bereitstellen eines Reaktionsdampfstroms,
(b) Mittel zum Zusammenführen und Vermischen des ersten Synthesegasstroms mit dem Reaktionsdampfstrom,
(c) eine erste CO-Konvertierungsstufe, Mittel zum Einleiten des ersten Synthesegasstroms mit dem beigemischten Reaktionsdampfstrom in die erste CO-Konvertierungsstufe, Mittel zum Ausleiten eines zweiten Synthesegasstroms mit einem zweiten H₂/CO-Verhältnis
(d) eine ersten Dampferzeugungsanlage, geeignet zum Erzeugen eines ersten Dampfstroms durch Verdampfen von Kesselspeisewasser und/oder einem wässrigen Prozesskondensat,
(e) Mittel zum Einleiten des zweiten Synthesegasstroms als Heizstrom in die erste Dampferzeugungsanlage, Mittel zum Ausleiten eines abgekühlten zweiten Synthesegasstroms und eines ersten Dampfstroms aus der ersten Dampferzeugungsanlage,
(f) eine zweite CO-Konvertierungsstufe, Mittel zum Einleiten des abgekühlten zweiten Synthesegasstroms in die zweite CO-Konvertierungsstufe, Mittel zum Ausleiten eines dritten Synthesegasstroms mit einem dritten H₂/CO-Verhältnis,
(g) mindestens eine Abkühlvorrichtung, geeignet zum Abkühlen des dritten Synthesegasstroms unter seinen Taupunkt, Mittel zum Einleiten des dritten Synthesegasstroms in die mindestens eine Abkühlvorrichtung, Mittel zum Ausleiten eines abgekühlten dritten Synthesegasstroms und des wässrigen Prozesskondensats,
   dadurch gekennzeichnet, dass
(h) ferner Mittel umfasst werden, die es gestatten, dass der Reaktionsdampfstrom den ersten Dampfstrom umfasst,
(i) ferner Mittel umfasst werden, die es gestatten, dass das Erzeugen des ersten Dampfstroms in der ersten Dampferzeugungsanlage durch Verdampfen von Kesselspeisewasser und/oder mindestens eines Teils des wässrigen Prozesskondensats erfolgt.

Dabei stellt die mit Buchstaben oder Zahlen nummerierte Merkmalsgliederung in den Ansprüchen nicht zwingenderweise die zeitliche Abfolge der Verfahrensschritte oder die räumliche Anordnung von Anlagenbestanteilen dar.

Unter Fluidverbindung zwischen zwei Bereichen wird jegliche Art von Verbindung verstanden, die es ermöglicht, dass ein Fluid, beispielsweise das flüssige Absorptionsmittel, von dem einen zu dem anderen der beiden Bereiche strömen kann, unbeachtlich etwaiger zwischengeschalteter Bereiche, Bauteile, Armaturen oder Vorrichtungen.

Unter CO-Konvertierungsstufe wird ein räumlich abgegrenzter Bereich verstanden, der so beschaffen ist, dass in seinem Inneren die CO-Konvertierungsreaktion durchgeführt werden kann. Dazu umfasst die CO- Konvertierungsstufe Mittel zum Einleiten eines zu konvertierenden Synthesegasstroms und von Wasser als Reaktionspartner, Mittel zum Ausleiten eines konvertierten, d. h. eines an Wasserstoff angereicherten und an CO abgereicherten Synthesegasstroms und einen für die CO-Konvertierungsreaktion aktiven Katalysator. Die CO-Konvertierungsstufe kann beispielsweise einen CO-Konvertierungsreaktor, insbesondere auch mehrere CO-Konvertierungsreaktoren umfassen, die jeweils ein einziges, insbesondere aber auch mehrere Katalysatorbetten enthalten. Die CO-Konvertierungsreaktoren und/oder die Katalysatorbetten können dabei nacheinander und/oder parallel von dem zu konvertierenden Synthesegasstrom durchströmt werden.

Unter CO-Konvertierungsbedingungen werden physikalisch-chemische Bedingungen verstanden, die eine mindestens teilweise, bevorzugt eine technisch relevante, beispielsweise eine weitgehend vollständige Umsetzung des im Rohsynthesegas enthaltenen Kohlenmonoxids in Kohlendioxid und Wasserstoff gestatten. Sie sind aus dem Stand der Technik an sich bekannt und umfassen beispielsweise die Verwendung geeigneter Katalysatoren und die Einstellung geeigneter Temperaturen. Die genauen CO-Konvertierungsbedingungen wird der Fachmann in Abhängigkeit von dem umzusetzenden Kohlenstoffträger bzw. dem gewünschten Konvertierungsgrad geeignet auswählen. Insbesondere wird er dabei auch den Einfluss der physikalisch-chemischen Bedingungen auf die Lage des Reaktionsgleichgewichts im Zusammenwirken mit der Reaktionskinetik berücksichtigen.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Unter dem überwiegenden Anteil eines Stoffes oder Stoffstroms wird ein Mengenanteil von größer 50 % verstanden. Sofern im Einzelfall nichts anderes angegeben ist, bezieht sich der Mengenanteil auf die Masse bzw. den Massenstrom.

Druckangaben in der Einheit bar(a) beziehen sich auf den Absolutdruck in bar, absolut. Druckangaben in der Einheit bar(g) beziehen sich auf den Überdruck in bar.

Der Erfindung liegt die Erkenntnis zugrunde, dass durch die Nutzung des erhaltenen Kondensats als einer Dampfquelle eine energetisch optimierte Erzeugung von Reaktionsdampf für die CO-Konvertierung erfolgen kann.

Der Erfindung liegt ferner die Erkenntnis zugrunde, dass die Spurenstoffe oder Störkomponenten, die in dem aus dem Produktgas der CO-Konvertierung abgeschiedenen Kondensat enthalten sind, in effektiver Weise durch Inkontaktbringen mit dem CO-Konvertierungskatalysator abgebaut, also hinsichtlich ihrer Konzentration signifikant reduziert werden können.

### Bevorzugte Ausgestaltungen der Erfindung

Eine besondere Ausgestaltung des erfindungsgemäßen Verfahrens ist dadurch gekennzeichnet, dass der Reaktionsdampfstrom aus dem ersten Dampfstrom und einem Frischdampfstrom besteht und das Erzeugen des ersten Dampfstroms in der ersten Dampferzeugungsanlage durch Verdampfen von Kesselspeisewasser erfolgt. Diese Art der Erzeugung des Reaktionsdampfstroms aus mehreren Komponenten bietet eine erhöhte Flexibilität, beispielsweise bei der Inbetriebnahme des Verfahrens.

Eine alternative Ausgestaltung des erfindungsgemäßen Verfahrens ist dadurch gekennzeichnet, dass der Reaktionsdampfstrom aus dem ersten Dampfstrom und einem Frischdampfstrom besteht und das Erzeugen des ersten Dampfstroms in der ersten Dampferzeugungsanlage durch Verdampfen mindestens eines Teils des wässrigen Prozesskondensats erfolgt. Auf diese Weise wird das anfallende Kondensat genutzt und es verringert sich der Aufbereitungs- bzw. Entsorgungsaufwand. Ferner kann somit der Verbrauch an Kesselspeisewasser reduziert werden.

Bevorzugt wird hierbei eine besondere Ausgestaltung des erfindungsgemäßen Verfahrens, die vorsieht, dass der Reaktionsdampfstrom aus dem ersten Dampfstrom besteht und das Erzeugen des ersten Dampfstroms in der ersten Dampferzeugungsanlage durch Verdampfen des überwiegenden Anteils des wässrigen Prozesskondensats erfolgt, wobei der verbliebene Anteil des wässrigen Prozesskondensats als Spülstrom aus dem Verfahren ausgeleitet wird. Hierdurch wird eine Anreicherung unerwünschter Störkomponenten innerhalb des Dampferzeugungskreislaufes vermieden.

In weiterer besonderer Ausgestaltung des erfindungsgemäßen Verfahrens ist vorgesehen, dass die erste Dampferzeugungsanlage zwei Wärmetauscher umfasst, wobei das Erzeugen des ersten Dampfstroms in der ersten Dampferzeugungsanlage im indirekten Wärmetausch gegen den zweiten Synthesegasstrom als Heizstrom im ersten Wärmetauscher und gegen einen heißen Frischdampfstrom als Heizstrom im zweiten Wärmetauscher erfolgt. Die Nutzung zweier unterschiedlicher Heizströme in der ersten Dampferzeugungsanlage zum Erzeugen des ersten Dampfstroms erhöht die Flexibilität der Verfahrensführung, beispielsweise bei der Inbetriebnahme des Verfahrens. Ferner ermöglicht die Nutzung des heißen Frischdampfstroms als Heizstrom im zweiten Wärmetauscher auch bei hohem Kondensatanfall dessen vollständige Verdampfung, da der Mengenstrom des Frischdampfes entsprechend groß gewählt werden kann, wohingegen der Mengenstrom des zweiten Synthesegasstroms als Heizstrom im ersten Wärmetauscher durch den Mengenstrom des Rohsynthesegases festgelegt ist. Nach seiner Nutzung als Heizstrom kann der nun abgekühlte Frischdampfstrom noch stofflich bzw. hinsichtlich seines Wärmeinhalts in benachbarten Verfahrensstufen oder Anlagenteilen eingesetzt werden, beispielsweise in der Erzeugung des Rohsynthesegases, z. B. durch Dampfreformierung.

In besonderer Ausgestaltung des erfindungsgemäßen Verfahrens besteht der Reaktionsdampfstrom aus dem ersten Dampfstrom besteht und das Erzeugen des ersten Dampfstroms erfolgt in der ersten Dampferzeugungsanlage durch Verdampfen des überwiegenden Anteils des wässrigen Prozesskondensats und eines Anteils an Kesselspeisewasser, wobei der verbliebene Anteil des wässrigen Prozesskondensats als Spülstrom aus dem Verfahren ausgeleitet wird. Auf diese Weise wird Kesselspeisewasser und Frischdampf eingespart und das anfallende Prozesskondensat stofflich genutzt, wobei vorteilhafterweise durch die Rückführung des Prozesskondensats in ihm enthaltene Störkomponenten zumindest teilweise katalytisch an dem CO-Konvertierungskatalysator abgebaut werden.

Bevorzugt wird es dabei, wenn der Reaktionsdampfstrom aus dem ersten Dampfstrom besteht und das Erzeugen des ersten Dampfstroms in der ersten Dampferzeugungsanlage durch Verdampfen des überwiegenden Anteils des wässrigen Prozesskondensats und eines Anteils an Kesselspeisewasser erfolgt, wobei der verbliebene Anteil des wässrigen Prozesskondensats als Spülstrom aus dem Verfahren ausgeleitet wird und wobei der Anteil an Kesselspeisewasser mengenmäßig dem Spülstrom entspricht. Hierdurch besteht eine einfache Möglichkeit, den Dampferzeugungskreislauf zu regeln und insbesondere konstant zu halten.

Eine besondere Ausgestaltung der erfindungsgemäßen Anlage ist dadurch gekennzeichnet, dass sie ferner Mittel umfasst, die es gestatten, dass der Reaktionsdampfstrom aus dem ersten Dampfstrom und einem Frischdampfstrom besteht und das Erzeugen des ersten Dampfstroms in der ersten Dampferzeugungsanlage durch Verdampfen von Kesselspeisewasser erfolgt. Diese Art der Erzeugung des Reaktionsdampfstroms aus mehreren Komponenten bietet eine erhöhte Flexibilität, beispielsweise bei der Inbetriebnahme der Anlage.

Eine alternative Ausgestaltung der erfindungsgemäßen Anlage ist dadurch gekennzeichnet, dass sie Mittel umfasst, die es gestatten, dass der Reaktionsdampfstrom aus dem ersten Dampfstrom und einem Frischdampfstrom besteht und das Erzeugen des ersten Dampfstroms in der ersten Dampferzeugungsanlage durch Verdampfen mindestens eines Teils des wässrigen Prozesskondensats erfolgt. Auf diese Weise wird das anfallende Kondensat genutzt und es verringert sich der Aufbereitungs- bzw. Entsorgungsaufwand. Ferner kann somit der Verbrauch an Kesselspeisewasser reduziert werden.

Bevorzugt wird hierbei eine besondere Ausgestaltung der erfindungsgemäßen Anlage, die vorsieht, dass Mittel umfasst werden, die es gestatten, dass der Reaktionsdampfstrom aus dem ersten Dampfstrom besteht und das Erzeugen des ersten Dampfstroms in der ersten Dampferzeugungsanlage durch Verdampfen des überwiegenden Anteils des wässrigen Prozesskondensats erfolgt, wobei der verbliebene Anteil des wässrigen Prozesskondensats als Spülstrom aus dem Verfahren ausgeleitet wird. Hierdurch wird eine Anreicherung unerwünschter Störkomponenten innerhalb des Dampferzeugungskreislaufes vermieden.

In weiterer besonderer Ausgestaltung der erfindungsgemäßen Anlage ist vorgesehen, dass die erste Dampferzeugungsanlage zwei Wärmetauscher umfasst, wobei das Erzeugen des ersten Dampfstroms in der ersten Dampferzeugungsanlage im indirekten Wärmetausch gegen den zweiten Synthesegasstrom als Heizstrom im ersten Wärmetauscher und gegen einen heißen Frischdampfstrom als Heizstrom im zweiten Wärmetauscher erfolgt. Die Nutzung zweier unterschiedlicher Heizströme in der ersten Dampferzeugungsanlage zum Erzeugen des ersten Dampfstroms erhöht die Flexibilität der Verfahrensführung, beispielsweise bei der Inbetriebnahme der Anlage. Ferner ermöglicht die Nutzung des heißen Frischdampfstroms als Heizstrom im zweiten Wärmetauscher auch bei hohem Kondensatanfall dessen vollständige Verdampfung, da der Mengenstrom des Frischdampfes entsprechend groß gewählt werden kann, wohingegen der Mengenstrom des zweiten Synthesegasstroms als Heizstrom im ersten Wärmetauscher durch den Mengenstrom des Rohsynthesegases festgelegt ist. Nach seiner Nutzung als Heizstrom kann der nun abgekühlte Frischdampfstrom noch stofflich bzw. hinsichtlich seines Wärmeinhalts in benachbarten Verfahrensstufen oder Anlagenteilen eingesetzt werden, beispielsweise in der Erzeugung des Rohsynthesegases, z. B. durch Dampfreformierung.

In besonderer Ausgestaltung der erfindungsgemäßen Anlage werden Mittel umfasst, die es gestatten, dass der Reaktionsdampfstrom aus dem ersten Dampfstrom besteht und das Erzeugen des ersten Dampfstroms in der ersten Dampferzeugungsanlage durch Verdampfen des überwiegenden Anteils des wässrigen Prozesskondensats und eines Anteils an Kesselspeisewasser erfolgt, wobei der verbliebene Anteil des wässrigen Prozesskondensats als Spülstrom aus dem Verfahren ausgeleitet wird. Auf diese Weise wird Kesselspeisewasser und Frischdampf eingespart und das anfallende Prozesskondensat stofflich genutzt, wobei vorteilhafterweise durch die Rückführung des Prozesskondensats in ihm enthaltene Störkomponenten zumindest teilweise katalytisch an dem CO-Konvertierungskatalysator abgebaut werden.

Bevorzugt wird es dabei, wenn auch Mittel umfasst werden, die es gestatten, dass der Reaktionsdampfstrom aus dem ersten Dampfstrom besteht und das Erzeugen des ersten Dampfstroms in der ersten Dampferzeugungsanlage durch Verdampfen des überwiegenden Anteils des wässrigen Prozesskondensats und eines Anteils an Kesselspeisewasser erfolgt, wobei auch Mittel umfasst werden, die es gestatten, dass der verbliebene Anteil des wässrigen Prozesskondensats als Spülstrom aus dem Verfahren ausgeleitet wird und wobei der Anteil an Kesselspeisewasser mengenmäßig dem Spülstrom entspricht. Hierdurch besteht eine einfache Möglichkeit, den Dampferzeugungskreislauf zu regeln und insbesondere konstant zu halten.

### Ausführungs- und Zahlenbeispiele

Weitere Merkmale, Vorteile und Anwendungsmöglichkeiten der Erfindung ergeben sich auch aus der nachfolgenden Beschreibung eines Ausführungs- und Zahlenbeispiels und der Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen
- Fig. 1: eine schematische Darstellung einer ersten beispielhaften Ausgestaltung eines Verfahrens bzw. einer Anlage gemäß der Erfindung,
- Fig. 2: eine schematische Darstellung einer zweiten beispielhaften Ausgestaltung eines Verfahrens bzw. einer Anlage gemäß der Erfindung,
- Fig. 3: eine schematische Darstellung einer dritten beispielhaften Ausgestaltung eines Verfahrens bzw. einer Anlage gemäß der Erfindung,

Die in den Figuren gezeigten Regel-, Absperr- und Förderorgane, beispielsweise Ventile, Absperrschieber oder Pumpen, sind lediglich exemplarisch dargestellt, um die Erläuterung des Verfahrensablaufs zu erleichtern. Weitere Organe der genannten Arten, sofern benötigt oder vorteilhaft, wird der Fachmann entsprechend vorzusehen wissen.

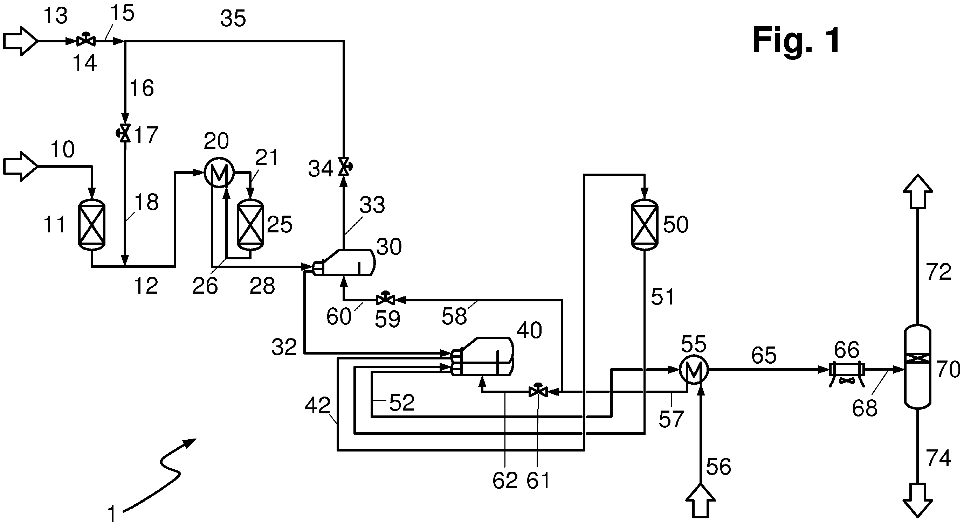

In der in Fig. 1 schematisch dargestellten Ausgestaltung eines Verfahrens bzw. einer Anlage 1 gemäß einer ersten beispielhaften Ausgestaltung der Erfindung wird über Leitung 10 Rohsynthesegas aus einer nicht bildlich gezeigten Anlage zur Synthesegaserzeugung herangeführt. Da im vorliegenden Ausführungsbeispiel die Synthesegaserzeugung mittels Kohlevergasung durchgeführt wird, enthält das erzeugte Rohsynthesegas noch Schwefelkomponenten wie z. B. Schwefelwasserstoff (H₂S). Daher wird das Rohsynthesegas in Entschwefelungsreaktor 11 einer Entschwefelung unterzogen. Diese kann beispielsweise durch adsorptive oder absorptive Bindung des Schwefels an geeignete Sorbentien, z. B. Zinkoxid (ZnO), erfolgen. Dem Entschwefelungsreaktor strömungsmäßig vorgeschaltet ist häufig ein bildlich nicht dargestellter Entstaubungsfilter.

Je nach der Art der für die CO-Konvertierung verwendeten Katalysatoren sind auch andere Verfahrensausgestaltungen möglich, bei denen der Entschwefelungsreaktor den CO-Konvertierungsstufen nachgeschaltet ist, zwischen mehreren CO-Konvertierungsstufen zwischengeschaltet ist oder ganz entfällt. Im Schrifttum wird diese Verfahrensführung auch als Rohgasshift oder Sauergas-Shift bezeichnet, während die oben beschriebene Ausgestaltung auch als Süßgas-Shift bezeichnet wird.

Das entschwefelte und ggf. entstaubte Rohsynthesegas verlässt über Leitung 12 als erster Synthesegasstrom mit einem ersten H₂/CO-Verhältnis den Entschwefelungsreaktor und wird mit einem Wasserdampfstrom als Reaktionsdampfstrom, der über Leitung 18 herangeführt wird, zusammengeführt. Die vereinigten Gasströme werden im Wärmetauscher 20 im indirekten Wärmetausch gegen heißes Reaktorproduktgas des Reaktors 25 aufgeheizt und treten über Leitung 21 in Reaktor 25 ein, der die erste CO-Konvertierungsstufe bildet. Hier erfolgt unter CO-Konvertierungsbedingungen ein erster Teilumsatz des im ersten Synthesegasstrom enthaltenen CO mit dem beigegebenen Dampf, wobei ein zweiter Synthesegasstrom mit einem zweiten, erhöhten H₂/CO-Verhältnis erhalten und aus dem Reaktor 25 über Leitung 26 ausgeleitet wird. Aufgrund der Exothermie der CO-Konvertierungsreaktion ist die Temperatur des den Reaktor 25 verlassenden Gasstroms höher als diejenige des in den Reaktor eintretenden Gasstroms; daher wird ein Teil der freigesetzten Wärmeenergie mittels Wärmetauscher 20 auf den über Leitung 12 herangeführten Gasstrom übertragen.

Über Leitung 28 wird der zweite Synthesegasstrom aus dem Wärmetauscher 20 ausgeleitet und in einen in eine erste Dampferzeugungsanlage 30 integrierten Wärmetauscher als Heizstrom eingeleitet. In der ersten Dampferzeugungsanlage 30 wird ein weiterer Teil der Wärmeenergie des zweiten Synthesegasstroms zur Dampferzeugung, insbesondere zur Erzeugung des für die CO-Konvertierung benötigten Reaktionsdampfs, genutzt. Das hierzu benötigte Kesselspeisewasser wird über die Leitungen 56, 57, 58, 60 und Regelventil 59 zu der ersten Dampferzeugungsanlage 30 geführt. Über Leitungen 33, 35, 16, 18 und Regelventile 34, 17 wird der erzeugte Dampf aus der ersten Dampferzeugungsanlage ausgeleitet und dem ersten Synthesegasstrom in Leitung 12 zugeführt. Zusätzlich wird überhitzter Hochdruckdampf über Leitungen 13, 15 und Regelventil 14 herangeführt und mit dem Dampfstrom in Leitung 35 zusammengeführt.

Über Leitung 32 wird der weiter abgekühlte zweite Synthesegasstrom aus dem Wärmetauscher der ersten Dampferzeugungsanlage ausgeleitet und einem ersten Wärmetauscher aufgegeben, der in eine zweite Dampferzeugungsanlage 40 integriert ist. In der zweiten Dampferzeugungsanlage 40 wird ein weiterer Teil der Wärmeenergie des zweiten Synthesegasstroms zur Dampferzeugung genutzt, wobei der hierbei erzeugte Dampf über eine nicht bildlich dargestellte Leitung aus der zweiten Dampferzeugungsanlage ausgeleitet wird und beispielsweise an externe Verbraucher abgegeben werden kann. Das hierzu benötigte Kesselspeisewasser wird über die Leitungen 56, 57, 62 und Regelventil 61 zu der zweiten Dampferzeugungsanlage 40 geführt.

Über Leitung 42 wird der weiter abgekühlte zweite Synthesegasstrom aus dem ersten Wärmetauscher der zweiten Dampferzeugungsanlage ausgeleitet und einem Reaktor 50 aufgegeben, der eine zweite CO-Konvertierungsstufe bildet. Hier erfolgt ein weiterer Teilumsatz des im zweiten Synthesegasstrom enthaltenen CO unter CO-Konvertierungsbedingungen mit noch enthaltenem Dampf, wobei ein dritter Synthesegasstrom mit einem dritten, weiter erhöhten H₂/CO-Verhältnis erhalten und aus dem Reaktor 50 über Leitung 51 ausgeleitet wird. Aufgrund der Exothermie der CO-Konvertierungsreaktion ist die Temperatur des den Reaktor 50 verlassenden Gasstroms höher als diejenige des in den Reaktor eintretenden Gasstroms; daher wird der dritte Synthesegasstrom einem zweiten Wärmetauscher aufgegeben, der ebenfalls in die zweite Dampferzeugungsanlage 40 integriert ist. Somit wird in der zweiten Dampferzeugungsanlage 40 wird ein Teil der Wärmeenergie des dritten Synthesegasstroms zur ebenfalls Dampferzeugung genutzt.

Über Leitung 52 wird der abgekühlte dritte Synthesegasstrom aus dem zweiten Wärmetauscher der zweiten Dampferzeugungsanlage ausgeleitet und in einen Wärmetauscher 55 eingeleitet. In diesem erfolgt die weitere Abkühlung des dritten Synthesegasstroms im indirekten Wärmetausch gegen kaltes Kesselspeisewasser, das über Leitung 56 dem Wärmetauscher 55 zugeführt und über Leitung 57 nunmehr erhitzt aus diesem abgeführt wird. Der weiter abgekühlte dritte Synthesegasstrom wird sodann über Leitung 65 einem Luftkühler 66 aufgegeben. In diesem erfolgt eine weitere Abkühlung des dritten Synthesegasstroms im indirekten Wärmetausch gegen Umgebungsluft unter seinen Taupunkt. Der weiter, nunmehr unter seinen Taupunkt abgekühlte dritte Synthesegasstrom wird anschließend über Leitung 68 aus dem Luftkühler ausgeleitet und einer Phasentrennvorrichtung 70 aufgegeben. In dieser erfolgt die Auftrennung des dritten Synthesegasstroms in ein gasförmiges, konvertiertes Synthesegasprodukt, das über Leitung 72 aus dem Verfahren bzw. aus der Anlage ausgeleitet und einer nicht weiter erörterten Konditionierung oder Weiterverarbeitung zugeführt wird.

Über Leitung 74 wird ein flüssiges, wasserhaltiges Kondensat aus der Phasentrennvorrichtung ausgeleitet. Es enthält typische Spurenkomponenten wie CO, CO₂, H₂, CH₄, NH₃ und Methanol und muss daher einer speziellen Aufarbeitung oder Entsorgung zugeführt werden.

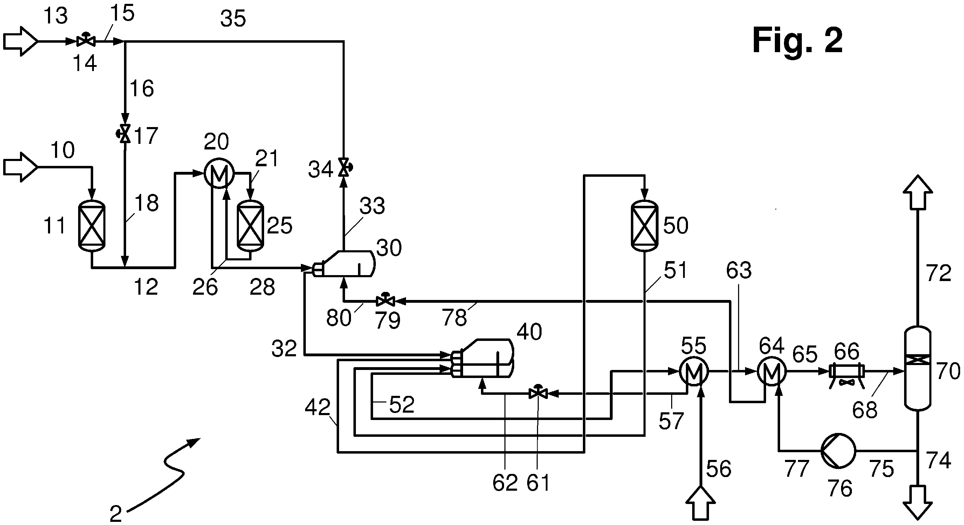

In der in Fig. 2 schematisch dargestellten Ausgestaltung eines Verfahrens bzw. einer Anlage 2 gemäß einer zweiten beispielhaften Ausgestaltung der Erfindung entsprechen die Anlagenteile mit Bezugszeichen 10 bis 74 hinsichtlich ihrer Beschaffenheit, Aufgaben und Eigenschaften den obigen Ausführungen zur Erörterung der Fig. 1, sofern nichts anderes angegeben wird. Es treten nunmehr neu hinzu die Leitungen 75, 77, 78, 80 sowie Pumpe 76 und Regelventil 79, über die mindestens ein Teil, ggf. auch das gesamte in der Phasentrennvorrichtung anfallende Kondensat bis auf einen kleinen Spülstrom zu der ersten Dampferzeugungsanlage 30 geführt wird und dort zur Erzeugung eines Teils des für die CO-Konvertierung benötigten Reaktionsdampfs dient. Vordem Eintritt in die erste Dampferzeugungsanlage wird das zurückgeführte Kondensat im zusätzlichen Wärmetauscher 64 im indirekten Wärmetausch gegen den dritten Synthesegasstrom erwärmt, der über die neu hinzugetretene Leitung 63 mit dem Wärmetauscher 55 verbunden ist. Vorteilhaft ist es bei dieser Ausgestaltung der Erfindung, dass die im Kondensat enthaltenen Spurenkomponenten beim erneuten Inkontaktbringen mit den in den Reaktoren 25 und 50 enthaltenen CO-Konvertierungskatalysatoren teilweise abgebaut und somit hinsichtlich ihrer Konzentration reduziert werden. Ferner reduziert sich die aus dem Verfahren bzw. der Anlage ausgeleitete Kondensatmenge und somit der Aufwand für eine Entsorgung oder externe Aufarbeitung des Kondensats. Zudem wird eine signifikante Menge an Kesselspeisewasser eingespart.

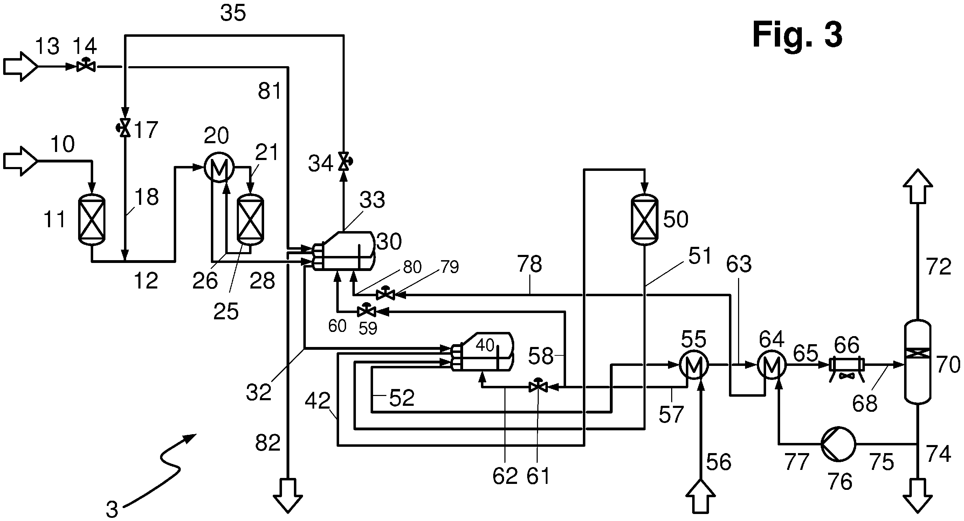

In der in Fig. 3 schematisch dargestellten Ausgestaltung eines Verfahrens bzw. einer Anlage 3 gemäß einer dritten beispielhaften Ausgestaltung der Erfindung wird im Unterschied zu den bislang erörterten Ausgestaltungen der Erfindung gemäß Fig. 1 und 2 die erste Dampferzeugungsanlage sowohl mit Kesselspeisewasser als auch mit rückgeführtem Kondensat beaufschlagt. Der für die CO-Konvertierung benötigte Reaktionsdampf wird ausschließlich in der ersten Dampferzeugungsanlage erzeugt und mit dem ersten Synthesegasstrom in Leitung 12 zusammengeführt. Um die für die Verdampfung der nunmehr größeren Flüssigkeitsmenge in der ersten Dampferzeugungsanlage benötigte größere Energiemenge bereitzustellen, wird die erste Dampferzeugungsanlage mit einem zweiten integrierten Wärmetauscher ausgestattet, in den über Leitungen 13, 81 und Regelventil 14 überhitzter Hochdruckdampf eingeleitet wird. Nach erfolgtem Wärmeaustausch wird der abgekühlte Dampf über Leitung 82 aus dem zweiten integrierten Wärmetauscher ausgeleitet. Im Unterschied zu den anhand von Fig. 1 und 2 diskutierten Ausgestaltungen der Erfindung wird der zugeführte Hochdruckdampf stofflich nicht verbraucht, sondern nur hinsichtlich seines Enthalpiegehalts genutzt. Er kann anschließend als Heizdampf oder Prozessdampf an externe Verbraucher abgegeben werden, was zusätzliche wirtschaftliche Vorteile erbringt.

### Zahlenbeispiele

In der nachfolgenden Tabelle werden typische Betriebsparameter der oben diskutierten Ausgestaltungen der Erfindung zusammengestellt und verglichen, um die bereits bei der Erörterung der einzelnen Ausgestaltungen erwähnten Vorteile mit Zahlen zu belegen.

**Tabelle: Typische Betriebsparameter der Ausgestaltungen der Erfindung, Fig. 1 bis 3**

| **Massenströme (t/h)** | **Fig. 1** | **Fig. 2** | **Fig. 3** |
|---|---|---|---|
| Dampf zu Leitung (13) | 5 | 5 | 5 |
| Dampf ab Leitung (82) | 0 | 0 | 5 |
| Dampf Verbrauch stofflich | 5 | 5 | 0 |
| Kondensat ab Leitung (74) | 10 | 5 | < 1 |
| Kondensat zurück Leitung (75) | 0 | 5 | > 9 |
| Dampf aus (30) Leitung (35) | 5 | 5 | 10 |

### Gewerbliche Anwendbarkeit

Mit der Erfindung wird ein Verfahren zum Herstellen eines konvertierten Synthesegases bzw. eine entsprechende Anlage bereitgestellt, die eine Ressourcen schonende, energetisch optimierte und apparativ wenig aufwendige Erzeugung von Reaktionsdampf für die CO-Konvertierung ermöglichen. Durch die Rückführung des anfallenden Kondensats zur Produktion von Reaktionsdampf wird der Verbrauch an Kesselspeisewasser und an Hochdruckdampf reduziert. Die ausgeleitete Kondensatmenge und der Aufwand für eine Entsorgung oder externe Aufarbeitung des Kondensats werden verringert. Ferner werden die im Kondensat enthaltenen Spurenkomponenten beim erneuten Inkontaktbringen mit den CO-Konvertierungskatalysatoren teilweise abgebaut und somit hinsichtlich ihrer Konzentration reduziert.

### Bezugszeichenliste

- 1,2,3: Anlage
- 10: Leitung
- 11: Entschwefelungsreaktor
- 12: Leitung
- 13: Leitung
- 14: Regelventil
- 15: Leitung
- 16: Leitung
- 17: Regelventil
- 18: Leitung
- 20: Wärmetauscher
- 21: Leitung
- 25: Reaktor (erste CO-Konvertierungsstufe)
- 26: Leitung
- 28: Leitung
- 30: erste Dampferzeugungsanlage
- 32: Leitung
- 33: Leitung
- 34: Regelventil
- 35: Leitung
- 40: zweite Dampferzeugungsanlage
- 42: Leitung
- 50: Reaktor (zweite CO-Konvertierungsstufe)
- 51: Leitung
- 52: Leitung
- 55: Wärmetauscher
- 56: Leitung
- 57: Leitung
- 58: Leitung
- 59: Regelventil
- 60: Leitung
- 61: Regelventil
- 62: Leitung
- 63: Leitung
- 64: Wärmetauscher
- 65: Leitung
- 66: Luftkühler
- 68: Leitung
- 70: Phasentrennvorrichtung
- 72: Leitung
- 74: Leitung
- 75: Leitung
- 76: Pumpe
- 77: Leitung
- 78: Leitung
- 79: Regelventil
- 80: Leitung
- 81: Leitung
- 82: Leitung

## Patentansprüche

1. Verfahren zum Herstellen eines konvertierten Synthesegases, enthaltend Wasserstoff (H₂) und Kohlenmonoxid (CO), umfassend folgende Verfahrensschritte:
(a) Bereitstellen eines ersten Synthesegasstroms mit einem ersten H₂/CO-Verhältnis und Bereitstellen eines Reaktionsdampfstroms,
(b) Zusammenführen und Vermischen des ersten Synthesegasstroms mit dem Reaktionsdampfstrom,
(c) Einleiten des ersten Synthesegasstroms mit dem beigemischten Reaktionsdampfstrom in eine erste CO-Konvertierungsstufe und Umsetzen unter CO-Konvertierungsbedingungen, Ausleiten eines zweiten Synthesegasstroms mit einem zweiten H₂/CO-Verhältnis,
(d) Bereitstellen einer ersten Dampferzeugungsanlage, geeignet zum Erzeugen eines ersten Dampfstroms durch Verdampfen von Kesselspeisewasser und/oder einem wässrigen Prozesskondensat,
(e) Einleiten des zweiten Synthesegasstroms als Heizstrom in die erste Dampferzeugungsanlage, Ausleiten eines abgekühlten zweiten Synthesegasstroms und eines ersten Dampfstroms aus der ersten Dampferzeugungsanlage,
(f) Einleiten des abgekühlten zweiten Synthesegasstroms in eine zweite CO-Konvertierungsstufe und Umsetzen unter CO-Konvertierungsbedingungen, Ausleiten eines dritten Synthesegasstroms mit einem dritten H₂/CO-Verhältnis,
(g) Einleiten des dritten Synthesegasstroms in mindestens eine Abkühlvorrichtung, Abkühlen des dritten Synthesegasstroms in der mindestens einen Abkühlvorrichtung unter seinen Taupunkt, Ausleiten eines abgekühlten dritten Synthesegasstroms und des wässrigen Prozesskondensats,
**dadurch gekennzeichnet, dass**
(h) der Reaktionsdampfstrom den ersten Dampfstrom umfasst,
(i) das Erzeugen des ersten Dampfstroms in der ersten Dampferzeugungsanlage durch Verdampfen von Kesselspeisewasser und/oder mindestens eines Teils des wässrigen Prozesskondensats erfolgt.

2. Verfahren nach Anspruch 1, **dadurch gekennzeichnet, dass** der Reaktionsdampfstrom aus dem ersten Dampfstrom und einem Frischdampfstrom besteht und das Erzeugen des ersten Dampfstroms in der ersten Dampferzeugungsanlage durch Verdampfen von Kesselspeisewasser erfolgt.

3. Verfahren nach Anspruch 1, **dadurch gekennzeichnet, dass** der Reaktionsdampfstrom aus dem ersten Dampfstrom und einem Frischdampfstrom besteht und das Erzeugen des ersten Dampfstroms in der ersten Dampferzeugungsanlage durch Verdampfen mindestens eines Teils des wässrigen Prozesskondensats erfolgt.

4. Verfahren nach Anspruch 1, **dadurch gekennzeichnet, dass** der Reaktionsdampfstrom aus dem ersten Dampfstrom besteht und das Erzeugen des ersten Dampfstroms in der ersten Dampferzeugungsanlage durch Verdampfen des überwiegenden Anteils des wässrigen Prozesskondensats erfolgt, wobei der verbliebene Anteil des wässrigen Prozesskondensats als Spülstrom aus dem Verfahren ausgeleitet wird.

5. Verfahren nach Anspruch 4, **dadurch gekennzeichnet, dass** die erste Dampferzeugungsanlage zwei Wärmetauscher umfasst, wobei das Erzeugen des ersten Dampfstroms in der ersten Dampferzeugungsanlage im indirekten Wärmetausch gegen den zweiten Synthesegasstrom als Heizstrom im ersten Wärmetauscher und gegen einen heißen Frischdampfstrom als Heizstrom im zweiten Wärmetauscher erfolgt.

6. Verfahren nach Anspruch 1, **dadurch gekennzeichnet, dass** der Reaktionsdampfstrom aus dem ersten Dampfstrom besteht und das Erzeugen des ersten Dampfstroms in der ersten Dampferzeugungsanlage durch Verdampfen des überwiegenden Anteils des wässrigen Prozesskondensats und eines Anteils an Kesselspeisewasser erfolgt, wobei der verbliebene Anteil des wässrigen Prozesskondensats als Spülstrom aus dem Verfahren ausgeleitet wird.

7. Verfahren nach Anspruch 6, **dadurch gekennzeichnet, dass** der Reaktionsdampfstrom aus dem ersten Dampfstrom besteht und das Erzeugen des ersten Dampfstroms in der ersten Dampferzeugungsanlage durch Verdampfen des überwiegenden Anteils des wässrigen Prozesskondensats und eines Anteils an Kesselspeisewasser erfolgt, wobei der verbliebene Anteil des wässrigen Prozesskondensats als Spülstrom aus dem Verfahren ausgeleitet wird und wobei der Anteil an Kesselspeisewasser mengenmäßig dem Spülstrom entspricht.

8. Anlage zum Herstellen eines konvertierten Synthesegases, enthaltend Wasserstoff (H₂) und Kohlenmonoxid (CO), umfassend folgende, in Fluidverbindung miteinander stehende Bestandteile:
(a) Mittel zum Bereitstellen eines ersten Synthesegasstroms mit einem ersten H₂/CO-Verhältnis und zum Bereitstellen eines Reaktionsdampfstroms,
(b) Mittel zum Zusammenführen und Vermischen des ersten Synthesegasstroms mit dem Reaktionsdampfstrom,
(c) eine erste CO-Konvertierungsstufe, Mittel zum Einleiten des ersten Synthesegasstroms mit dem beigemischten Reaktionsdampfstrom in die erste CO-Konvertierungsstufe, Mittel zum Ausleiten eines zweiten Synthesegasstroms mit einem zweiten H₂/CO-Verhältnis
(d) eine ersten Dampferzeugungsanlage, geeignet zum Erzeugen eines ersten Dampfstroms durch Verdampfen von Kesselspeisewasser und/oder einem wässrigen Prozesskondensat,
(e) Mittel zum Einleiten des zweiten Synthesegasstroms als Heizstrom in die erste Dampferzeugungsanlage, Mittel zum Ausleiten eines abgekühlten zweiten Synthesegasstroms und eines ersten Dampfstroms aus der ersten Dampferzeugungsanlage,
(f) eine zweite CO-Konvertierungsstufe, Mittel zum Einleiten des abgekühlten zweiten Synthesegasstroms in die zweite CO-Konvertierungsstufe, Mittel zum Ausleiten eines dritten Synthesegasstroms mit einem dritten H₂/CO-Verhältnis,
(g) mindestens eine Abkühlvorrichtung, geeignet zum Abkühlen des dritten Synthesegasstroms unter seinen Taupunkt, Mittel zum Einleiten des dritten Synthesegasstroms in die mindestens eine Abkühlvorrichtung, Mittel zum Ausleiten eines abgekühlten dritten Synthesegasstroms und des wässrigen Prozesskondensats,
**dadurch gekennzeichnet, dass**
(h) ferner Mittel umfasst werden, die es gestatten, dass der Reaktionsdampfstrom den ersten Dampfstrom umfasst,
(i) ferner Mittel umfasst werden, die es gestatten, dass das Erzeugen des ersten Dampfstroms in der ersten Dampferzeugungsanlage durch Verdampfen von Kesselspeisewasser und/oder mindestens eines Teils des wässrigen Prozesskondensats erfolgt.

9. Anlage nach Anspruch 8, ferner umfassend Mittel, die es gestatten, dass der Reaktionsdampfstrom aus dem ersten Dampfstrom und einem Frischdampfstrom besteht und das Erzeugen des ersten Dampfstroms in der ersten Dampferzeugungsanlage durch Verdampfen von Kesselspeisewasser erfolgt.

10. Anlage nach Anspruch 8, ferner umfassend Mittel, die es gestatten, dass der Reaktionsdampfstrom aus dem ersten Dampfstrom und einem Frischdampfstrom besteht und das Erzeugen des ersten Dampfstroms in der ersten Dampferzeugungsanlage durch Verdampfen mindestens eines Teils des wässrigen Prozesskondensats erfolgt.

11. Anlage nach Anspruch 8, ferner umfassend Mittel, die es gestatten, dass der Reaktionsdampfstrom aus dem ersten Dampfstrom besteht und das Erzeugen des ersten Dampfstroms in der ersten Dampferzeugungsanlage durch Verdampfen des überwiegenden Anteils des wässrigen Prozesskondensats erfolgt, wobei auch Mittel umfasst werden, die es gestatten, dass der verbliebene Anteil des wässrigen Prozesskondensats als Spülstrom aus dem Verfahren ausgeleitet wird.

12. Anlage nach Anspruch 11, wobei die erste Dampferzeugungsanlage zwei Wärmetauscher umfasst, wobei auch Mittel umfasst werden, die es gestatten, dass das Erzeugen des ersten Dampfstroms in der ersten Dampferzeugungsanlage im indirekten Wärmetausch gegen den zweiten Synthesegasstrom als Heizstrom im ersten Wärmetauscher und gegen einen heißen Frischdampfstrom als Heizstrom im zweiten Wärmetauscher erfolgt.

13. Anlage nach Anspruch 8, ferner umfassend Mittel, die es gestatten, dass der Reaktionsdampfstrom aus dem ersten Dampfstrom besteht und das Erzeugen des ersten Dampfstroms in der ersten Dampferzeugungsanlage durch Verdampfen des überwiegenden Anteils des wässrigen Prozesskondensats und eines Anteils an Kesselspeisewasser erfolgt, wobei auch Mittel umfasst werden, die es gestatten, dass der verbliebene Anteil des wässrigen Prozesskondensats als Spülstrom aus dem Verfahren ausgeleitet wird.

14. Anlage nach Anspruch 13, ferner umfassend Mittel, die es gestatten, dass der Reaktionsdampfstrom aus dem ersten Dampfstrom besteht und das Erzeugen des ersten Dampfstroms in der ersten Dampferzeugungsanlage durch Verdampfen des überwiegenden Anteils des wässrigen Prozesskondensats und eines Anteils an Kesselspeisewasser erfolgt, wobei auch Mittel umfasst werden, die es gestatten, dass der verbliebene Anteil des wässrigen Prozesskondensats als Spülstrom aus dem Verfahren ausgeleitet wird und dass der Anteil an Kesselspeisewasser mengenmäßig dem Spülstrom entspricht.
